# EUROPÄISCHE PATENTSCHRIFT

(11) **EP 1 665 059 B1**
(45) Veröffentlichungstag und Bekanntmachung des Hinweises auf die Patenterteilung: **24.01.2007**
(21) Anmeldenummer: 03753299.1
(22) Anmeldetag: 09.09.2003
(51) Int. Cl.: G06F 13/38, H04Q 7/32

(54) **SCHALTUNGSANORDNUNG ALS SCHNITTSTELLE ZWISCHEN SIM-KARTE UND GSM-MODEM**
CIRCUIT ARRANGEMENT THAT FUNCTIONS AS AN INTERFACE BETWEEN A SIM CARD AND GSM MODEM
CIRCUIT SERVANT D'INTERFACE ENTRE UNE CARTE SIM ET UN MODEM GSM

(43) Veröffentlichungstag der Anmeldung: 07.06.2006
(73) Patentinhaber: SIEMENS AKTIENGESELLSCHAFT, 80333 München (DE)
(72) Erfinder: NEUHAUS, Hans-Jürgen, 12161 Berlin (DE); PETSCHKE, Marten, 10318 Berlin (DE)
(86) Internationale Anmeldenummer: PCT/DE2003/003030
(87) Internationale Veröffentlichungsnummer: WO 2005/026971

(56) Entgegenhaltungen:
- US-A- 5 923 187
- US-A1- 2002 047 045
- US-B1- 6 584 326

## Beschreibung

Die Erfindung betrifft eine Schaltungsanordnung nach dem Oberbegriff des Anspruchs 1 sowie ein Verfahren zur Signalrichtungsfestlegung in einer Datenleitung zwischen diesen Schnittstellen.

Zur Authentifizierung eines Benutzers eines GSM-Mobilfunkgerätes haben sich SIM-Karten als Standard etabliert. In herkömmlichen GSM-Geräten, wie etwa einem Mobiltelefon, ist der Kartenleser für SIM-Karten in dem Gerät integriert. Mit der zunehmenden Funktionalität von GSM-Geräten wächst aber auch die Bedeutung der SIM-Karte, die nicht mehr allein zur Überprüfung der Berechtigung zum Telefonieren, sondern für so unterschiedliche Anwendungen, wie beispielsweise Zugangsberechtigung zu Sicherheitsbereichen, also letztlich als Schlüsselersatz, oder für Bezahlfunktionen, verwendet wird.

Dabei stellt es sich heraus, dass bei einigen Anwendungen eine räumliche Trennung des SIM-Kartenlesers von dem GSM-Gerät wünschenswert ist. Beispielsweise kann die SIM-Karte in einen entsprechenden Kartenleser eines AutomobiLs eingesetzt werden, um einen Benutzer damit für eine GSM-Anlage im Fahrzeug zu authentifizieren. Weiterhin kann im privaten wie auch kommerziellen Bereich ein Benutzer sich über einen SIM-Kartenleser für Telefonanlagen, Computer, Netzwerkteile, Kassierautomaten oder sonstige Geräte mit GSM-Funktionalität authentifizieren. Dabei möchte man aus Sicherheits gründen für die Übertragung der Authentifizierungsdaten eine direkte Verbindung zwischen dem Kartenleser und dem GSM-Gerät vorsehen, die in den genannten Anwendungen oftmals aufgrund der räumlichen Gegebenheiten mehrere Meter lang sein muss.

In der Regel sind aber die elektrischen Treiber für die SIM-Kartenschnittstelle in GSM-Modems nur für Entfernungen kleiner als 50 cm ausgelegt.

Es sind zwar integrierte Schaltkreise erhältlich, die eine "Verlängerung" auf mehrere Meter ermöglichen. Da aber die Datenleitung zu der SIM-Karte bidirektional ausgelegt ist, benötigen diese Schaltkreise ein Steuersignal für die Signalrichtung. Ein solches Signal steht jedoch an Standard-GSM-Modems extern nicht zur Verfügung. Solche Schaltkreise sind daher nur für die direkte Integration in GSM-Modems konzipiert, und überdies sind sie kostenintensiv.

Eine andere Möglichkeit bietet die Verwendung von GSM-Modems mit einer Fernzugriffsfunktion für SIM-Daten (sog. Remote SIM Access - RSA). Hierbei werden die Daten aus der SIM-Karte an einer entfernten Stelle ein- und ausgelesen und per AT-Kommandos (Hayes-Standardbefehlssatz für Modems, von ATtention) zwischen GSM-Modem und SIM-Karte ausgetauscht. Die Datenübertragung kann dabei über Draht oder Funk (z.B. Blue Tooth) erfolgen. Diese Lösung ist ebenfalls kostenintensiv und setzt darüber hinaus den Einsatz von GSM-Modems mit RSA-Funktionalität voraus, die am Markt nur vereinzelt erhältlich sind.

Ein weitere Möglichkeit bietet die Verwendung eines UARTs nach US 6,584,326.

Aufgabe der Erfindung ist es daher, die Möglichkeit einer Verbindung eines separaten SIM-Kartenlesers an ein Standard-GSM-Modem zu schaffen, das weder ein externes Signal für die Daten-Signalrichtung zur Verfügung stellt noch über RSA-Funktionalität verfügt. Zugleich soll damit die Grundlage gegeben sein, die Verbindungsstrecke vorteilhafterweise auf mehrere Meter verlängern zu können.

Die erfindungsgemäße Lösung für die Schaltanordnung ist im einzelnen im Anspruch 1 sowie ein erfindungsgemäßes Verfahren zur Richtungsfestlegung im Anspruch 12 angegeben.

Die Erfindung schließt den wesentlichen Gedanken ein, eine Schaltanordnung zur Schaltung zwischen die Schnittstellen des SIM-Kartenlesers und des GSM-Modems anzugeben, die ohne ein externes Richtungssignal für die Datenleitung auskommt, indem sie die Signalrichtung selbständig erkennt. Wenn dann über eine der beiden Schnittstellen Signale übertragen werden sollen, wird die Datenleitung in der Gegenrichtung blockiert. Darüber hinaus sind die Elemente der Schaltung so ausgelegt, dass sie in zwei Gruppen eingeteilt werden können, je nachdem, ob sie Signale des SIM-Kartenlesers oder solche des GSM-Modems verarbeiten.

Man kann dann in einer vorteilhaften Weiterbildung die Schaltung gemäß diesen Gruppen auf zwei Chips verteilen und zwischen die Chips eine Leitung der gewünschten Länge schalten.

Vorteilhafterweise sind in die unidirektionalen Datenleitungen jeweils Datensignal-Aufbereitungseinrichtungen geschaltet. Somit kann die Qualität von Datensignalen erhöht werden, die durch die Weiterleitung über die lange Schnittstelle beeinträchtigt sind.

Bevorzugt sind die erste Datensignal-Blockiereinrichtung, die erste Datensignal-Aufbereitungseinrichtung und das erste Gegenrichtungs-Sperrelement einerseits und die zweite Datensignal-Blockiereinrichtung, die zweite Datensignal-Aufbereitungseinrichtung und das zweite Gegenrichtungs-Sperrelement andererseits als je ein einziges Schaltelement ausgebildet. Das sorgt für ein kompaktes Layout der Schaltung und für einen einfacheren Aufbau und folglich für einfache und kostengünstige Herstellung sowie geringere Fehleranfälligkeit.

In einer zweckmäßigen Weiterbildung weisen die erste und zweite unidirektionale Datenleitung einen ersten bzw. zweiten Leitungstreiber auf, der insbesondere ein Push-Pull-Leitungstreiber mit niedriger Impedanz ist und der jeweils die Datensignale auf die unidirektionale Datenleitung einkoppelt. Solche Leitungstreiber erhöhen die Qualität des Datensignals und verringern die Wahrscheinlichkeit von Datenverlusten.

Bevorzugt ist dabei ein erster und zweiter Widerstand in Reihe mit dem ersten bzw. dem zweiten Leitungstreiber geschaltet. Diese Widerstände dienen der Leitungsanpassung, d.h. sie verhindern bzw. verringern Reflexion elektromagnetischer Wellen.

Vorteilhafterweise sind die erste und zweite Datensignal-Richtungserkennungseinrichtung, die erste und zweite Datensignal-Blockiereinrichtung sowie die erste und zweite Richtungserkennungs-Blockiereinrichtung jeweils als Komparatoren, insbesondere mit einer Schwellspannung von 1,5 V ausgelegt. Dies gilt bei der gängigen 3 Volt Versorgungsspannung des gültigen SIM-Standards, und Komparatoren sind sehr einfache Schaltbausteine, welche die relevanten Aufgaben erfüllen.

In einer weiteren Ausführungsform sind die jeweils paarweise auftretenden Elemente in zwei Gruppen mit je einem Element jeden Paares eingeteilt, wobei die eine Gruppe räumlich nahe bei der SIM-Karte und die andere Gruppe räumlich nahe bei dem GSM-Modem angeordnet ist und Verbindungsleitungen zwischen Elementen aus verschiedenen Gruppen bis zu mehrere Meter lang sein können. Damit kann der Anschluss einer SIM-Karte an ein von ihr durch eine entsprechende Distanz getrennt angeordnetes GSM-Modem realisiert werden, ohne dass von dem GSM-Modem irgendeine unterstützende Funktionalität für einen solchen Fernzugriff gefordert wäre.

Bevorzugt verbindet eine Taktleitung einen Taktausgang des GSM-Modems mit einem Takteingang der SIM-Karte. Hierbei sind eine Taktsignal-Aufbesserungseinrichtung und ein Taktleitungstreiber, insbesondere ein Push-Pull-Leitungstreiber mit niedriger Impedanz, auf der Taktleitung zwischengeschaltet, die das Taktsignal auf eine bis zu mehrere Meter lange Verlängerungsleitung einkoppelt. Taktleitungstreiber und Aufbesserungseinrichtung sorgen dafür, dass Qualitätsverluste des Taktsignal über eine mehrere Meter lange Taktleitung kompensiert werden, damit SIM-Karte und GSM-Modem entsprechend voneinander entfernt angeordnet sein können.

Vorteilhafterweise ist der Taktleitung eine Erzeugungseinrichtung und eine Abschlusseinrichtung für ein invertiertes Signal parallelgeschaltet. Damit kann das Taktsignal symmetrisch übertragen und somit die elektromagnetische Abstrahlung verringert werden. Bevorzugt ist der Erzeugungseinrichtung und dem Taktleitungstreiber je ein dritter und vierter Widerstand in Reihe geschaltet. Diese Widerstände dienen der Leitungsanpassung.

Vorteilhafterweise verbindet eine Resetleitung einen Resetausgang des GSM-Modems mit einem Reseteingang der SIM-Karte, der eine Resetsignal-Aufbesserungseinrichtung zwischengeschaltet ist. Damit kann erreicht werden, dass Qualitätsverluste des Reset-Signal bei der Übertragung besonders im Falle einer längeren Resetleitung kompensiert werden.

Die Erfindung wird nachstehend anhand eines Ausführungsbeispiels und unter Bezugnahme auf die beigefügten Zeichnungen beschrieben. Die Zeichnungen zeigen in:
Fig. 1 ein Blockschaltbild einer erfindungsgemäßen Schaltanordnung,
Fig. 2 einen Ausschnitt der Schaltanordnung gemäß Fig. 1, der eine erste Ausführungsform der Datenleitung darstellt,
Fig. 3 einen Ausschnitt der Schaltanordnung gemäß Fig. 1, der eine zweite Ausführungsform der Datenleitung darstellt,
Fig. 4 einen Ausschnitt der Schaltanordnung gemäß Fig. 1, der ein Blockschaltbild der Taktleitung darstellt und
Fig. 5 ein vollständiges Schaltbild der erfindungsgemäßen Schaltanordnung gemäß Fig. 1.

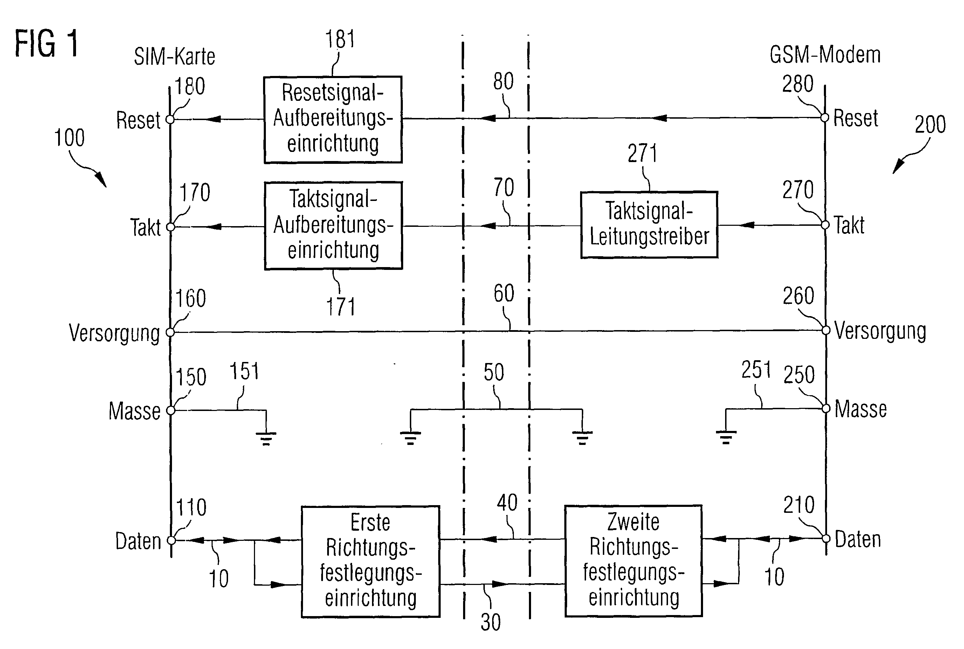

In Fig. 1 ist ein Blockschaltbild einer erfindungsgemäßen Schaltungsanordnung dargestellt, die über insgesamt fünf einzelne Leitungen die Schnittstelle zwischen einer SIM-Karte 100 und einem GSM-Modem 200 bildet: eine Datenleitung 10, eine Masseleitung 50, eine Versorgungsleitung 60, eine Taktleitung 70 und eine Resetleitung 80.

Die bidirektionale Datenleitung 10 verzweigt sich in eine erste unidirektionale Datenleitung 30 mit Signalrichtung von einem Karten-Datenein-/-ausgang 110 der SIM-Karte 100 zu einem Modem-Datenein-/-ausgang 210 des GSM-Modems 200 und eine parallele zweite unidirektionale Datenleitung 40 mit Signalrichtung von dem Modem-Datenein-/-ausgang 210 zu dem Karten-Datenein-/-ausgang 110. Die Leitungsrichtung aller richtungsspezifischen Leitungen 30, 40, 70, 80 ist in Fig. 1 durch Pfeile dargestellt.

In die erste und die zweite unidirektionale Datenleitung 30, 40 sind in Reihe eine erste Richtungsfestlegungseinrichtung 120, die näher bei der SIM-Karte 100 angeordnet ist, sowie eine zweite Richtungsfestlegungseinrichtung 220 geschaltet, die näher bei dem GSM-Modem 200 angeordnet ist.

Die erste Richtungsfestlegungseinrichtung 120 ist in der Lage, das Senden eines Datensignals am Karten-Datenein-/-ausgang 110 zu erkennen und daraufhin die zweite Richtungsfestlegungseinrichtung 220 sowie die zweite unidirektionale Datenleitung 40 in deren Durchlassrichtung zu blockieren. Folglich bleibt beim Senden eines Datensignals von der SIM-Karte 100 an das GSM-Modem 200 nur die erste unidirektionale Datenleitung 30 durchlässig, während Datensignale in der Gegenrichtung vollständig blockiert werden. Entsprechend ist die zweite Richtungsfestlegungseinrichtung 220 in der Lage, das Senden eines Datensignals am Modem-Datenein-/-ausgang 210 zu erkennen und daraufhin die erste Richtungsfestlegungseinrichtung 220 sowie die erste unidirektionale Datenleitung 30 in deren Durchlassrichtung zu blockieren, so dass nur die zweite unidirektionale Datenleitung 40 von dem GSM-Modem 200 zu der SIM-Karte 100 durchlässig ist und Datensignale in der Gegenrichtung vollständig blockiert werden.

Es kann also erreicht werden, dass niemals gleichzeitig die SIM-Karte 100 und das GSM-Modem 200 Datensignale über die Datenleitung 10 übertragen, sondern stets nur eine Übertragung in einer der beiden Richtungen stattfindet, da während dieser Übertragung die Gegenrichtung blockiert wird.

Die Masseleitung 50 verbindet Masseanschlüsse der Schaltelemente, die in der Nähe der SIM-Karte 100 angeordnet sind, mit Masseanschlüssen der Schaltelemente, die in der Nähe des GSM-Modems 200 angeordnet sind. Eine Karten-Masseleitung 151 führt das Massepotential eines Karten-Massestiftes 150 der SIM-Karte nach außen, und eine Modem-Masseleitung 251 führt das Massepotential eines Modem-Massestiftes 250 des GSM-Modems 200 nach außen. Insgesamt ist somit dafür gesorgt, dass in der gesamten Schaltungsanordnung sowie in der SIM-Karte 100 und im GSM-Modem 200 dasselbe Massepotential vorhanden ist.

Die Versorgungsleitung 60 verbindet einen Karten-Versorgungsstift 160 der SIM-Karte mit dem Modem-Versorgungsstift 260 des GSM-Modems. Nach derzeitigem SIM-Standard ist eine Spannung von 3,0 Volt vorgesehen, die Erfindung ist aber nicht auf diese Spannung beschränkt. Für gewöhnlich wird das GSM-Modem 200 die SIM-Karte 100 mit Spannung versorgen.

Die unidirektionale Taktleitung 70 verbindet einen Modem-Taktausgang 270 des GSM-Modems 200 mit einem Karten-Takteingang 170 der SIM-Karte 100. Eine Taktsignal-Aufbereitungseinrichtung 171 ist in der Nähe der SIM-Karte 100 vorgesehen, und ein Takt-Leitungstreiber 272 ist in der Nähe des GSM-Modems 200 angeordnet, um das Taktsignal, das während der Übertragung durch die Taktleitung 70 an Qualität verliert, für die Übertragung davor bzw. danach aufzubereiten.

Die unidirektionale Resetleitung 80 verbindet einen Modem-Resetausgang 280 des GSM-Modems 200 mit einem Karten-Reseteingang 180 der SIM-Karte 100. Eine Resetsignal-Aufbereitungseinrichtung 181 in der Nähe der SIM-Karte 100 bereitet das Resetsignal nach der Übertragung für die SIM-Karte 100 auf.

In Fig. 1 ist mit den beiden gestrichelten senkrechten Linien eine mögliche Separierung der Schaltelemente in zwei Gruppen angedeutet, wobei die eine Gruppe räumlich der SIM-Karte 100 und die andere Gruppe dem GSM-Modem 200 zugeordnet ist. Die Verbindungsleitungen, die in Fig. 1 im Bereich zwischen den beiden gestrichelten senkrechten Linien liegen, können dann auf bis zu mehrere Meter verlängert werden, um die SIM-Karte 100 bzw. den zugehörigen, nicht dargestellten SIM-Kartenleser und das GSM-Modem 200 um bis zu mehrere Meter voneinander getrennt anzuordnen.

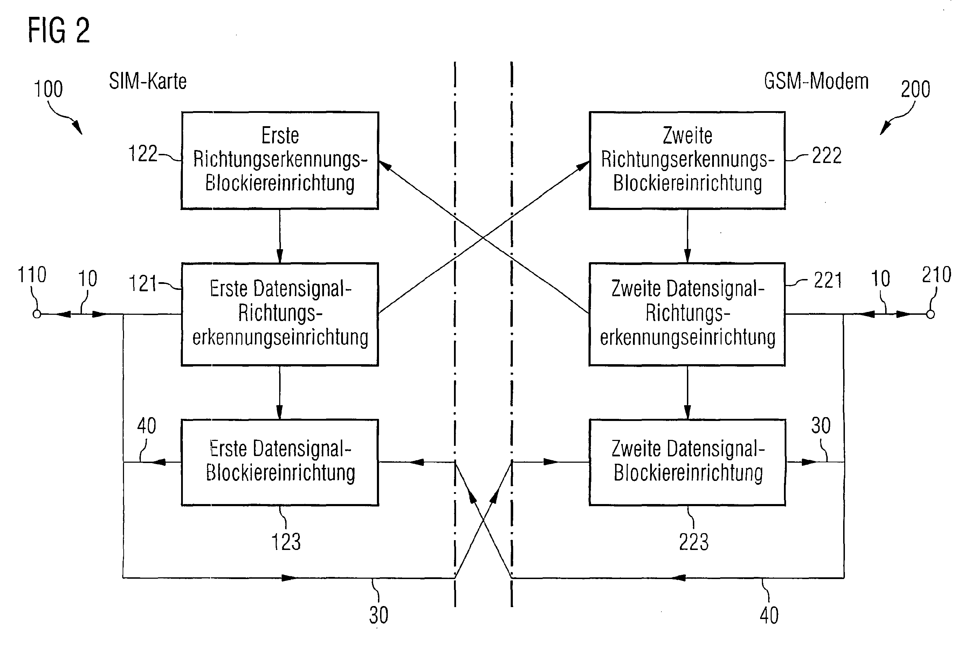

In Fig. 2 ist eine erste Ausführungsform der Datenleitung 10 mit den zugehörigen Schaltelementen als ein Ausschnitt der Fig. 1 gezeigt, wobei auch Einzelheiten dargestellt sind, die in Fig. 1 nicht zu sehen sind. Hierbei sind die erste und zweite Richtungsfestlegungseinrichtung 120, 220 in jeweils drei Unterelemente aufgespalten, nämlich eine erste bzw. zweite Datensignal-Richtungserkennungseinrichtung 121, 221, eine erste bzw. zweite Richtungserkennungs-Blockiereinrichtung 122, 222 sowie eine erste bzw. zweite Datensignal-Blockiereinrichtung 123, 223. In die parallelen ersten und zweiten unidirektionalen Datenleitungen 30, 40 ist die erste bzw. zweite Datensignal-Blockiereinrichtung 123, 223 geschaltet, welche die Datensignalleitung auch in der jeweiligen Durchlassrichtung blockieren kann.

Die Datenleitung 10 verzweigt sich von dem Karten-Datenein-/-ausgang 110 zusätzlich in einen dritten parallelen Zweig, der auf einen Eingang der ersten Datensignal-Richtungserkennungseinrichtung 121 verschaltet ist. Deren erster Ausgang ist mit einem Eingang der zweiten Richtungserkennungs-Blockiereinrichtung 222 und deren Ausgang wiederum mit einem Eingang der zweiten Datensignal-Richtungserkennungseinrichtung 221 verbunden. Ein zweiter Ausgang der ersten Datensignal-Richtungserkennungseinrichtung 121 ist mit einen Eingang der ersten Datensignal-Blockiereinrichtung 123 verbunden.

Ganz analog verzweigt sich die Datenleitung 10 auch von dem Modem-Datenein-/-ausgang 210 zusätzlich in einen dritten Zweig, parallel zu den beiden unidirektionalen Datenleitungen 30, 40, der auf einen Eingang der zweiten Datensignal-Richtungserkennungseinrichtung 221 verschaltet ist. Deren erster Ausgang ist mit einem Eingang der ersten Richtungserkennungs-Blockiereinrichtung 122 und deren Ausgang wiederum mit einem Eingang der ersten Da tensignal-Richtungserkennungseinrichtung 121 verbunden. Ein zweiter Ausgang der zweiten Datensignal-Richtungserkennungseinrichtung 221 ist mit einen Eingang der zweiten Datensignal-Blockiereinrichtung 223 verbunden.

Entsprechend der Fig. 1 lassen sich die Schaltelemente in zwei Gruppen einteilen, die nahe bei der SIM-Karte 100 bzw. nahe bei dem GSM-Modem 200 angeordnet sind, wobei Leitungen, die Elemente aus verschiedenen Gruppen verbinden, bis zu mehrere Meter lang sein können. Diese Leitungen sind in Fig. 2 im Bereich zwischen den beiden senkrechten gestrichelten Linien angeordnet.

Es wird nun beschrieben, wie ein an dem Karten-Datenein-/-ausgang 110 anliegendes Sende-Datensignal zu dem Modem-Kartenein-/-ausgang 210 übertragen wird und dabei die Leitung in der Gegenrichtung blockiert. Der umgekehrte Fall einer Übertragung von dem GSM-Modem 200 zu der SIM-Karte 100 bedarf dann aufgrund der Symmetrie keiner weiteren Erläuterung.

Im Ruhezustand sind sämtliche Elemente der Richtungsfestlegungseinrichtungen 120, 220 deaktiviert. Ein nun anliegendes Datensignal an dem Karten-Datenein-/-ausgang 110 erreicht über den dritten parallelen Zweig den Eingang der ersten Datensignal-Richtungserkennungseinrichtung 121, die ein Datensignal in Richtung von der SIM-Karte 100 zu dem GSM-Modem 200 erkennt. Über ihren ersten Ausgang aktiviert die Datensignal-Richtungserkennungseinrichtung 121 daraufhin die zweite Richtungserkennungs-Blockiereinrichtung 222. Gleichzeitig aktiviert sie über ihren zweiten Ausgang die erste Datensignal-Blockiereinrichtung 123. Die zweite Richtungserkennungs-Blockiereinrichtung 221 blockiert über ihren Ausgang die zweite Datensignal-Richtungserkennungseinrichtung 222. Damit wird insbesondere auch verhindert, das die zweite Datensignal-Richtungserkennungseinrichtung 222 die ersten Datensignal-Richtungserkennungseinrichtung 122 oder die zweite Datensignal-Blockiereinrichtung 223 blockieren kann, falls zeitgleich oder später auch am Modem-Datenein-/-ausgang 210 ein Sende-Datensignal anliegt.

Das Sende-Datensignal am Karten-Datenein-/-ausgang 110 erreicht parallel auch die beiden unidirektionalen Datenleitungen 30, 40. Es liegt an der ersten unidirektionale Datenleitung 30 in Durchlassrichtung an, und die zweite Datensignal-Blockiereinrichtung 223 ist deaktiviert. Folglich kann das Datensignal ungehindert an den Modem-Datenein-/-ausgang 210 übertragen werden. Für die zweite unidirektionale Datenleitung 40 liegt es in Sperrrichtung an und kann hier folglich nicht weitergeleitet werden.

Da zu diesem Zeitpunkt also die erste Datensignal-Richtungserkennungseinrichtung 121 und die erste Datensignal-Blockiereinrichtung 123 aktiviert sind, während die zweite Datensignal-Richtungserkennungseinrichtung 221 sowie die zweite Datensignal-Blockiereinrichtung 223 deaktiviert sind, kann ein nachfolgend etwa anliegendes Sende-Datensignal am Modem-Datenein-/-ausgang weder die zweite Datensignal-Richtungserkennungseinrichtung 221 aktivieren noch durch eine der beiden unidirektionalen Datenleitungen 30, 40 übertragen werden. Die erste unidirektionale Datenleitung 30 erreicht es in Gegenrichtung, in der zweiten unidirektionalen Datenleitung 40 sperrt die erste Daterisignal-Blockiereinrichtung 123.

Wenn die Übertragung des Sende-Datensignals beendet ist, also an dem Karten-Datenein-/-ausgang kein Sende-Datensignal mehr anliegt, werden sämtliche aktivierten Schaltelemente in der Datenleitung 10 deaktiviert, bis erneut an der SIM-Karte 100 oder an dem GSM-Modem 200 ein Sende-Datensignal anliegt.

Insgesamt kann also erreicht werden, dass niemals gleichzeitig die SIM-Karte 100 und das GSM-Modem 200 Datensignale über die Datenleitung 10 übertragen. Sollten sowohl am Karten-Datenein-/-ausgang 110 wie auch am Modem-Datenein-/-ausgang 210 nahezu gleichzeitig Sende-Datensignale anliegen, so werden die stets vorhandenen minimalen Zeit- oder Leitungsgeschwindigkeitsunterschiede dazu führen, dass eine der beiden Richtungsfestlegungseinrichtungen 120, 220 die andere blockiert und somit Übertragung von Datensignalen dennoch nur in einer Richtung erfolgen kann, bis der aktuelle Datensendevorgang abgeschlossen ist.

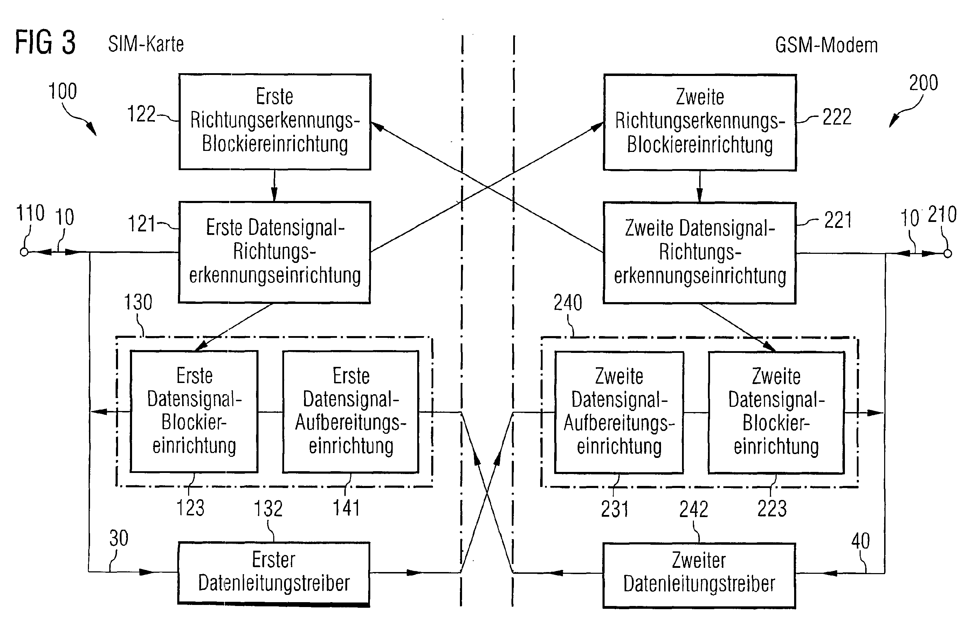

In Fig. 3 ist eine zweite Ausführungsform der Datenleitung 10 mit den zugehörigen Schaltelementen als ein Detail der Fig. 1 gezeigt. Es werden nur die Elemente beschrieben, die von denen der in Fig. 2 dargestellten ersten Ausführungsform abweichen:

In die erste unidirektionale Datenleitung 30 ist in der Nähe der SIM-Karte 100 ein erster Datenleitungstreiber 132 sowie in der Nähe des GSM-Modems 200 eine nachfolgend als "zweite" bezeichnete Datensignal-Aufbereitungseinrichtung 231 geschaltet. Analog ist in die zweite unidirektionale Datenleitung 40 in der Nähe des GSM-Modems 200 ein zweiter Datenleitungstreiber 242 sowie in der Nähe der SIM-Karte 100 eine erste Datensignal-Aufbereitungseinrichtung 141 geschaltet. Dabei kann die erste und zweite Datensignal-Aufbereitungseinrichtung 141, 231 jeweils mit der zweiten bzw. ersten Datensignal-Blockiereinrichtung als ein integrales erstes bzw. zweites Aufbereitungs-/Blockierelement 130 bzw. 240 ausgebildet sein.

Die Funktion der Datenleitungstreiber 132, 242 ist, das Datensignal in ein solches umzuwandeln, das für die Übertragung über eine längere Datenleitung von bis zu mehreren Metern Länge geeignet ist, während die Datensignal-Aufbesserungseinrichtungen 141, 231 das Datensignal nach dieser Übertragung wieder in ein für die SIM-Karte 100 bzw. das GSM-Modem 200 verständliches Datensignalformat zurückwandeln. Damit wird das Problem gelöst, dass in herkömmlichen SIM-Kartenlesern und GSM-Modems eine Übertragung von Datensignalen nur über eine kurze Entfernung von bis zu einem halben Meter möglich ist.

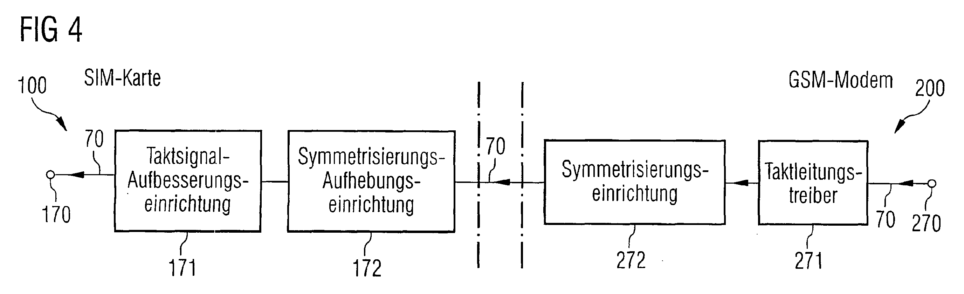

Fig. 4 zeigt einen Ausschnitt der Schaltanordnung gemäß Fig. 1, in der das Blockschaltbild der Taktleitung auch mit solchen Einzelheiten dargestellt ist, die in Fig. 1 nicht zu sehen sind.

In die Taktleitung 70 sind seriell in der Nähe des GSM-Modems 200 ein Taktleitungstreiber 271, eine Symmetrisierungseinrichtung 272 sowie in der Nähe der SIM-Karte 100 seriell eine Symmetrisierungs-Aufhebungseinrichtung 172 sowie eine Taktsignal-Aufbereitungseinrichtung 171 geschaltet. Die Funktion des Taktleitungstreibers 271 und der Taktsignal-Aufhebungseinrichtung 171 ist die gleiche wie diejenige der entsprechenden Elemente in der Datenleitung 10, d.h. die Vor- und Aufbereitung des Taktsignals für die Überbrückung einer Leitungslänge von mehreren Metern.

Die Symmetrisierungseinrichtung 272 symmetrisiert das Taktsignal für die Übertragung über die Taktleitung, während die Symmetrisierungs-Aufhebungseinrichtung 172 das symmetrische Taktsignal wieder in ein einseitiges Taktsignal zurückwandelt. Die symmetrische Übertragung hat den Vorteil einer geringeren elektromagnetischen Abstrahlung, da sich die elektromagnetischen Wellen außerhalb des Taktleiters wenigstens zum Teil gegenseitig auslöschen können.

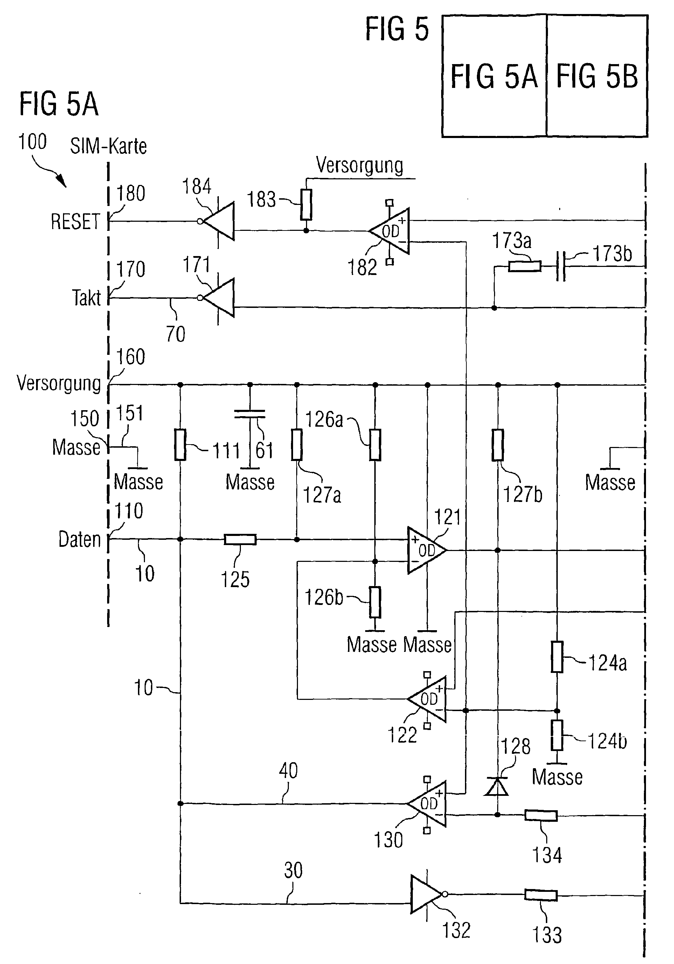

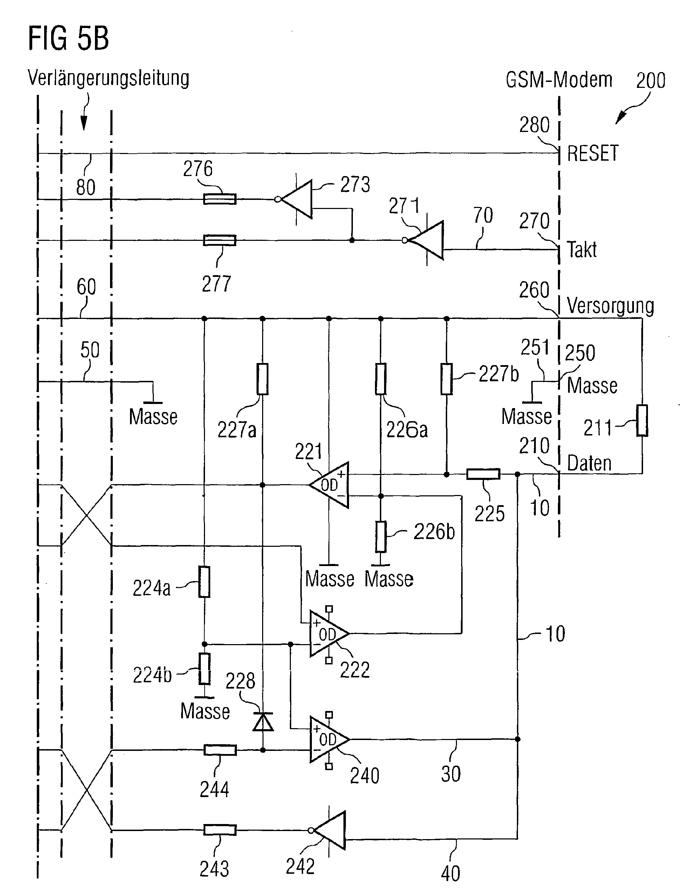

In Fig. 5 ist ein vollständiges Schaltbild der erfindungsgemäßen Schaltanordnung aus Fig. 1 dargestellt. Hier sind im Gegensatz zu Fig. 1 nicht nur Funktionsblöcke, sondern gängige einzelne Schaltelemente zur Illustration einer beispielhaften Ausführung der Erfindung gezeigt. Wo immer möglich, werden im folgenden dieselben Bezugszeichen wie bisher verwendet, wenn Schaltelemente analog zu oben bereits eingeführten Funktionselementen sind. Dabei wird auf vollkommen gleichartige Elemente nicht weiter eingegangen.

Der allgemeine Aufbau in die Datenleitung 10, die Masseleitung 50, die Versorgungsleitung 60, die Taktleitung 70 und die Resetleitung 80 ist auch in Fig. 5 gezeigt. Die Leitungen sind in dem Bereich, der durch die beiden gestrichelten senkrechten Linien abgegrenzt ist, als Verlängerungsleitungen ausgelegt, die bis zu mehrere Meter lang sein können.

Der Karten-Datenein-/-ausgang 110 und der Modem-Datenein-/-ausgang 210 sind in der Funktion als Ausgang, dem ISO-Standard folgend, als Open Collector (oder als Open Drain) ausgeführt. Ein Karten-Collector-Widerstand 111 ist daher zwischen die Versorgungsleitung 60 und den Karten-Datenein-/ausgang 110 sowie ein Modem-Collector-Widerstand 211 wischen die Versorgungsleitung 60 und den Modem-Datenein-/-ausgang 210 geschaltet. Beide Collector-Widerstände 111, 211 haben eine Größenordnung von 3-20kΩ, wobei der Modem-Collector-Widerstand 211 zumeist bereits in das GSM-Modem integriert ist.

Die Datenleitung 10 verzweigt in die parallelen ersten und zweiten unidirektionalen Datenleitungen 30, 40 sowie in einen dritten parallelen Zweig. Dabei sind in den unidirektionalen Datenleitungen 30, 40 als erster und zweiter Datenleitungstreiber 132, 242 jeweils Inverter-Gatter vorgesehen. Die Datenleitungstreiber 132, 242 können Gatter in HCMOS-Technologie (High performance Complementary Metal Oxid Semiconductor) sein, diese Auswahl richtet sich nach der zu treibenden Leitungskapazität. Mit dem ersten Datenleitungstreiber 132 ist ein erster Datentreiber-Widerstand 133 und mit dem zweiten Datenleitungstreiber 242 ein zweiter Datentreiber-Widerstand 243 in Reihe geschaltet. Diese Datentreiber-Widerstände dienen der Leitungsanpassung, d.h. sie verhindern bzw. verringern die Reflexion von elektromagnetischen Wellen im Leiter, und sie sorgen für eine Begrenzung der Steilheit der Signal flanken und somit für eine verringerte Abstrahlung, d.h. ein besseres EMV-Verhalten (elektromagnetische Verträglichkeit).

Als integriertes erstes und zweites Aufbereitungs-/Blockierelement 130, 240 ist je ein als invertierender Schwellenspannungs-Komparator geschalteter Komparator vorgesehen, der also zugleich als erste bzw. zweite Datensignal-Blockiereinrichtung 123, 223 und als erste bzw. zweite Datensignal-Aufbereitungseinrichtung 141, 231 dient. Auf den einen invertierenden Eingang dieser Komparatoren 130, 240 ist über je einen Serienwiderstand 134, 244 die erste bzw. zweite unidirektionale Datenleitung 30, 40 geschaltet, auf dem zweiten nichtinvertierenden Eingang liegt über je zwei als Spannungsteiler mit Masse 50 bzw. Versorgungsspannung 60 geschaltete Widerstände 124a, 124b bzw. 224a, 224a die Schwellenwertspannung an. Sind die Widerstände 124a, 124b bzw. 224a, 224b gleich groß, so stellen sie die Schwellenwertspannung auf die halbe Versorgungsspannung ein, insbesondere bei einer Versorgungsspannung von 3,0 Volt auf 1,5 Volt. Besitzen die Komparatoren Open-Collector-Ausgänge, wie insbesondere bei LP339-Komparatoren, so können ihre Ausgänge wie dargestellt unmittelbar mit den Karten- bzw. Modem-Datenein-/-ausgängen 110, 210 verbunden werden.

Durch die Komparatoren 130, 240 wird zugleich auch die Durchlassrichtung der unidirektionalen Datenleitungen 30, 40 festgelegt, d.h. sie dienen als erstes bzw. zweites Gegenrichtungs-Sperrelement.

Die ersten und zweiten Datensignal-Richtungserkennungseinrichtungen 121, 221 sind ebenfalls als Komparatoren realisiert. Die Datenleitung 10 ist jeweils mit dem nichtinvertierenden Eingang der ersten und zweiten Datensignal-Richtungserkennungseinrichtungen 121, 221 über einen ersten bzw. zweiten Erkennungseinrichtungs-Widerstand 125, 225 verbunden. Auf dem zweiten invertierenden Eingang liegt über je zwei als Spannungsteiler mit Masse 50 bzw. Versorgungsspannung 60 geschaltete Widerstände 126a, 126b bzw. 226a, 226a die Schwellenwertspannung an. Sind auch diese Widerstände 126a, 126b bzw. 226a, 226b gleich groß, so stellen sie die Schwellenwertspannung auf die halbe Versorgungsspannung ein, insbesondere bei einer Versorgungsspannung von 3,0 Volt auf 1,5 Volt.

Die Versorgungsleitung 60 ist vor dem nichtinvertierenden Eingang und nach dem Ausgang der ersten bzw. der zweiten Datensignal-Richtungserkennungseinrichtung 121, 221 über je einen Widerstand 127a, 127b bzw. 227a, 227b sowie 111 mit dem dritten Zweig der Datenleitung 10 verbunden. Der Ausgang der ersten bzw. zweiten Datensignal-Richtungserkennungseinrichtung 121, 221 ist über eine erste und zweite Diode 128, 228 mit dem invertierenden Eingang der ersten bzw. der zweiten integrierten Aufbereitungs-/Blockierelement 130, 240 und über die Verlängerungsleitung mit einem nichtinvertierenden zweiten bzw. der ersten Richtungserkennungs-Blockiereinrichtung 222, 122 verbunden.

Dabei ist auch die erste und zweite Richtungserkennungs-Blockiereinrichtung 122, 222 als Komparator ausgelegt, und ihr jeweiliger zweiter invertierender Eingang erhält jeweils die Schwellenspannung über den Spannungsteiler 124a, 124b bzw. 224a, 224b, während ihr Ausgang mit dem invertierenden Eingang der ersten bzw. zweiten Datensignal-Richtungserkennungseinrichtung verbindet.

Nachfolgend wird die Funktion der Schaltungsanordnung bei der Übertragung eines Daten-Sendesignals von dem Modem-Datenaus-/-eingang 210 an den Karten-Datenaus-/-eingang 110 beschrieben. Ein Datenübertragungsvorgang in der Gegenrichtung bedarf aus Symmetriegründen keiner weiteren Erläuterung. Das Verhalten bei gleichzeitigem Senden von Daten in beide Richtungen wurde bereits oben im Zusammenhang mit Fig. 2 beschrieben.

Im Ruhezustand steht der Modem-Datenaus-/-eingang 210 wegen des im GSM-Modem 200 integrierten Pull-Up-Widerstands 211 auf HIGH-Pegel. Sobald das GSM-Modem 200 zu senden beginnt, wird dies durch einen LOW-Pegel signalisiert. Dies führt zu einem LOW-Pegel am Ausgang der zweiten Datensignal-Richtungserkennungseinrichtung 221. Dieses LOW-Signal wird über die zweite Diode 228 am invertierenden Eingang des zweiten Aufbesserungs-/Blockierelementes 240 wirksam und führt zu einer Sperrung der ersten unidirektionalen Datenleitung 30. Somit kann ein Datensignal von der SIM-Karte 100 nicht übertragen werden.

Der LOW-Pegel am Ausgang der zweiten Datensignal-Richtungserkennungseinrichtung 221 wirkt außerdem über die Verlängerungsleitung am nichtinvertierenden Eingang der ersten Richtungserkennungs-Blockiereinrichtung und erzeugt an deren Ausgang ein LOW-Signal. Dieses bewirkt am invertierenden Eingang der ersten Datensiqnal-Richtungserkennungseinrichtung 121 eine Blockierung des nichtinvertierenden Eingangs; der Ausgang der ersten Datensignal-Richtungserkennungseinrichtung 121 bleibt unabhängig von dem nichtinvertierenden Eingang auf HIGH-Pegel. Selbst wenn also jetzt ein Daten-Sendesignal des Karten-Datenein-/-ausgangs 110 an dem nichtinvertierenden Eingang der ersten Datensignal-Richtungserkennungseinrichtung 121 anliegt, kann es den Ausgang nicht auf LOW-Pegel legen:

Die erste Datensignal-Richtungserkennungseinrichtung 121 ist blockiert.

Der HIGH-Pegel am Ausgang der ersten Datensignal-Richtungserkennungseinrichtung 121 wird über die Verlängerungsleitung an den nichtinvertierenden Eingang der zweiten Richtungserkennungs-Blockiereinrichtung 222 geleitet. Deren Ausgang bleibt offen (Open Collector). Die zweite Richtungserkennungs-Blockiereinrichtung 222 kann deshalb die zweite Datensignal-Richtungserkennungseinrichtung 221, die den Richtungsfestlegungsvorgang eingeleitet hat, nicht blockieren.

Somit ist die Datenleitung 10 nur in der Richtung von dem GSM-Modem 200 zu der SIM-Karte 100 durchlässig, und die Schaltelemente der Datenleitung 10 haben genau die Funktionalität der Richtungsfestlegung und der verbesserten Datenleitung, die oben im Zusammenhang mit den Figuren 1 bis 3 beschrieben worden ist.

Die Masseleitung 50 weicht nicht von der im Zusammenhang mit den Blockschaltbildern der Fig. 1 beschriebenen Konfiguration ab.

In der Versorgungsleitung 60 ist lediglich der gegen Masse geschaltete Kondensator 61 zusätzlich vorgesehen, welcher der Entkopplung der Betriebsspannung von den Leitungsbedingungen dient. Die Versorgungsspannung liegt nach dem geltenden SIM-Standard bei 3,0 Volt, die Erfindung ist aber hierauf nicht eingeschränkt. Der ohmsche Widerstand der Versorgungsleitung 60 sollte so gering wie möglich sein.

Der Taktleitungstreiber 271 der Taktleitung 70 ist als einfaches Gatter ausgelegt. Die Taktsignal-Aufbereitungseinrichtung 171 ist ebenfalls als Gatter ausgelegt, wobei dieses Gatter bei geringeren Leistungskapazitäten, etwa bei einer kürzeren Verlängerungsleitung, auch entfallen kann.

Die Symmetrisierungseinrichtung 272 ist als ein Parallelzweig zu der Taktleitung ausgelegt, wobei in einem Zweig das Taktsignal durch ein Gatter 273 invertiert wird. Auf der Gegenseite dienen in dem Zweig mit dem invertierten Taktsignal ein Widerstand 173a und ein Kondensator 173b als Abschluss, ehe die beiden Parallelzweige wieder zusammengeführt werden. Dadurch wird auf der Gegenseite die Symmetrisierungs-Aufhebungseinrichtung 172 realisiert. Da das Taktsignal relativ hochfrequent ist (ca. 1-4 MHz), ist eine geringere elektromagnetische Abstrahlung durch diese symmetrische Signalübertragung wünschenswert.

Ein erster und zweiter Taktleitungs-Widerstand 276, 277 ist mit dem Taktleitungstreiber 271 bzw. dem invertierenden Gatter 273 der Symmetrisierungseinrichtung 272 in Reihe geschaltet. Diese Widerstände dienen der Leitungsanpassung, ganz analog den ersten und zweiten Datentreiber-Widerständen 133, 243.

Auf der Resetleitung 80 kann das Signal ohne gesonderten Treiber übertragen werden. Die Resetsignal-Aufbesserungseinrichtung 181 besteht aus einem Komparator 182, der seine Schwellenwertspannung von dem Spannungsteiler 124a, 124b erhält und am Ausgang über einen Reset-Widerstand 183 mit der Versorgungsleitung verbunden ist. Nachfolgend ist noch ein Gatter 184 in Reihe mit dem Ausgang des Komparators 182 geschaltet. Die Resetsignal-Aufbesserungseinrichtung 181 kann bei geringeren Leistungskapazitäten auch entfallen, etwa bei einer kürzeren Verlängerungsleitung.

Die erfindungsgemäße Schaltanordnung bereitet also SIM-Signale am GSM-Modem auf und wandelt sie am SIM-Kartenhalter wieder in für die SIM-Karte verträgliche Signale um und umgekehrt. Bei der Signalaufbereitung werden EMV-Belange insbesondere bezüglich der Abstrahlungseigenschaften berücksichtigt.

Gleichzeitig Legt die Schaltanordnung beim Senden eines Datensignals die Übertragungsrichtung fest, so dass nicht gleichzeitig in beide Richtungen gesendet wird: Die Seite, die zuerst aktiv wird, verriegelt sich selbst und schaltet die Gegenseite unwirksam.

Bei der Schaltung sind Schutzmaßnahmen gegen elektrostatische Beschädigungen (ESD oder Electrostatic Discharge) nicht berücksichtigt. Dem Fachmann ist aber geläufig, wie Elemente für derartige Maßnahmen zu ergänzen wären.

### Bezugszeichenliste

- 10: Datenleitung
- 30: erste unidirektionale Datenleitung
- 40: zweite unidirektionale Datenleitung
- 50: Masseleitung
- 60: Versorgungsleitung
- 70: Taktleitung
- 80: Resetleitung
- 100: SIM-Karte
- 110: Karten-Datenein-/-ausgang
- 111: Karten-Collektorwiderstand
- 120: erste Richtungsfestlegungseinrichtung
- 121: erste Datensignal-Richtungerkennungseinrichtung
- 122: erste Richtungserkennungs-Blockiereinrichtung
- 123: erste Datensignal-Blockiereinrichtung
- 124a,b: Widerstände (Spannungsteiler)
- 125: erster Erkennungseinrichtungs-Widerstand
- 126a,b: Widerstände (Spannungsteiler)
- 127a,b: Widerstände (Anschluss an 3,0 V für 121)
- 128: erste Diode
- 130: erstes Aufbereitungs-/Blockierelement
- 132: erster Datenleitungstreiber
- 133: erster Datentreiber-Widerstand
- 134: Serienwiderstand (für 130)
- 141: erste Datensignal-Aufbesserungseinrichtung
- 150: Karten-Massestift
- 151: Karten-Masseleitung
- 160: Karten-Versorgungstift
- 170: Karten-Takteingang
- 171: Taktsignal-Aufbereitungseinrichtung
- 172: Symmetrisierungs-Aufhebungseinrichtung
- 173a: Abschlusswiderstand
- 173b: Abschlusskondensator
- 180: Karten-Reseteingang
- 181: Resetsignal-Aufbereitungseinrichtung
- 182: Komparator (in 181)
- 183: Reset-Widerstand
- 184: Gatter (in 181)
- 200: GSM-Modem
- 210: Modem-Datenein-/-ausgang
- 211: Modem-Collectorwiderstand
- 220: zweite Richtungsfestlegungseinrichtung
- 221: zweite Datensignal-Richtungerkennungseinrichtung
- 222: zweite Richtungserkennungs-Blockiereinrichtung
- 223: zweite Datensignal-Blockiereinrichtung
- 224a,b: Widerstände (Spannungsteiler)
- 225: zweiter Erkennungseinrichtungs-Widerstand
- 226a,b: Widerstände (Spannungsteiler)
- 227a,b: Widerstände (Anschluss an 3,0 V für 221)
- 228: zweite Diode
- 231: zweite Datensignal-Aufbesserungseinrichtung
- 240: zweites Aufbereitungs-/Blockierelement
- 242: zweiter Datenleitungstreiber
- 243: zweiter Datentreiber-Widerstand
- 244: Serienwiderstand (für 240)
- 250: Modem-Massestift
- 251: Modem-Masseleitung
- 260: Modem-Versorgungstift
- 270: Modem- Taktausgang
- 271: Taktleitungstreiber
- 272: Symmetrisierungseinrichtung
- 273: Gatter (Invertierer)
- 276: erster Taktleitungs-Widerstand
- 277: zweiter Taktleitungs-Widerstand
- 280: Modem-Resetausgang

## Patentansprüche

1. Schaltungsanordnung als Schnittstelle zwischen einer SIM-Karte (100) und einem GSM-Modem (200) ohne Steuersignal für die Datenrichtung und ohne Remote SIM Access Fernzugriffsfunktion, die eine bidirektionale Datenleitung (10) aufweist, welche einen Karten-Datenein-/-ausgang (110) der SIM-Karte (100) mit einem Modem-Datenein-/-ausgang (210) des GSM-Modems (200) verbindet,
**dadurch gekennzeichnet, dass**
- die Datenleitung (10) einen Bereich aufweist, in dem sie in parallele erste und zweite unidirektionale Datenleitungen (30, 40) verzweigt ist, in denen ein erstes und zweites Gegenrichtungs-Sperrelement (130, 240) vorgesehen ist, so dass die erste unidirektionale Datenleitung (30) nur in Richtung von der SIM-Karte (100) zu dem GSM-Modem (200) und die zweite unidirektioriale Datenleitung (40) nur in der umgekehrten Richtung für Datensignale durchlässig sind,
- je eine erste und zweite Datensignal-Blockiereinrichtung (123, 223) in die erste bzw. die zweite unidirektionale Datenleitung (30, 40) geschaltet ist, welche jeweils Datensignale auch in der Durchlassrichtung blockieren kann,
- eine erste und zweite Datensignal-Richtungserkennungseinrichtung (121, 221) mit dem Karten- bzw. dem Modem-Datenein-/-ausgang (110, 210) verbunden ist und
- die erste bzw. zweite Datensignal-Richtungserkennungseinrichtung (121, 221) über eine zweite bzw. erste Richtungserkennungs-Blockiereinrichtung (122, 222) mit der zweiten bzw. der ersten Datensignal-Richtungserkennungseinrichtung (221, 121) verbunden ist,
wobei die Übertragung von Datensignalen stets nur in einer Richtung erfolgen kann, indem das Senden von Datensignalen der SIM-Karte (100) von der ersten Datensignal-Richtungserkennungseinrichtung (121) erkannt wird, die dar-aufhin mittels der zweiten Richtungserkennungs-Blockiereinrichtung (222) die zweite Datensignal-Richtungserkennungseinrichtung (221) sowie mittels der ersten Datensignal-Blockiereinrichtung (123) die Datenleitung (40) in Richtung von dem GSM-Modem (200) zu der SIM-Karte (100) blockiert bzw. umgekehrt das Senden von Datensignalen des GSM-Modems (200) von der zweiten Datensignal-Richtungserkennungseinrichtung (221) erkannt wird, die daraufhin mittels der ersten Richtungserkennungs-Blockiereinrichtung (122) die erste Datensignal-Richtungserkennungseinrichtung (121) sowie mittels der zweiten Datensignal-Blockiereinrichtung (223) die Datenleitung (30) in Richtung von der SIM-Karte (100) zu dem GSM-Modem (200) blockiert.

2. Schaltungsanordnung nach Anspruch 1,
**dadurch gekennzeichnet, dass**
in die zweite unidirektionale Datenleitung (40) eine erste Datensignal-Aufbereitungseinrichtung (141) und in die erste unidirektionale Datenleitung (30) eine zweite Datensignal-Aufbereitungseinrichtung (231) geschaltet ist.

3. Schaltungsanordnung nach Anspruch 2,
**dadurch gekennzeichnet, dass**
die erste Datensignal-Blockiereinrichtung (123), die erste Datensignal-Aufbereitungseinrichtung (141) und das erste Gegenrichtungs-Sperrelement einerseits und die zweite Datensignal-Blockiereinrichtung (223), die zweite Datensignal-Aufbereitungseinrichtung (231)und das zweite Gegenrichtungs-Sperrelement andererseits als je ein einziges Schaltelement (130, 240) ausgebildet sind.

4. Schaltungsanordnung nach einem der Ansprüche 1 bis 3,
**dadurch gekennzeichnet, dass**
die erste und zweite unidirektionale Datenleitung (30, 40) einen ersten bzw. zweiten Datenleitungstreiber (132, 242) aufweist, der insbesondere ein Push-Pull-Leitungstreiber mit niedriger Impedanz ist, der jeweils die Datensignale auf die unidirektionale Datenleitung (30, 40) einkoppelt.

5. Schaltungsanordnung nach Anspruch 4,
**dadurch gekennzeichnet, dass**
ein erster und zweiter Datentreiber-Widerstand (133, 243) in Reihe mit dem ersten bzw. dem zweiten Datenleitungstreiber (132, 242) geschaltet ist.

6. Schaltungsanordnung nach einem der Ansprüche 3 bis 5,
**dadurch gekennzeichnet, dass**
die erste und zweite Datensignal-Richtungserkennungseinrichtung (121, 221), die erste und zweite Datensignal-Blockiereinrichtung (123, 223) sowie die erste und zweite Richtungserkennungs-Blockiereinrichtung (122, 222) jeweils als Komparatoren, insbesondere mit einer Schwellenspannung von 1,5 Volt, ausgelegt sind.

7. Schaltungsanordnung nach einem der Ansprüche 1 bis 6,
**dadurch gekennzeichnet, dass**
von den paarweise auftretenden Elementen je eines räumlich nahe bei der SIM-Karte (100) und das andere räumlich nahe bei dem GSM-Modem (200) angeordnet ist und Verbindungsleitungen (10, 50, 60, 70, 80) dazwischen mit einer Länge zwischen 20 cm und mehreren Metern vorgesehen sind.

8. Schaltungsanordnung nach einem der Ansprüche 1 bis 7,
**dadurch gekennzeichnet, dass**
eine Taktleitung (70) einen Modem-Taktausgang (270) des GSM-Modems (200) mit einem Karten-Takteingang (170) der SIM-Karte (100) verbindet, wobei eine Taktsignal-Aufbesserungseinrichtung (171) und ein Taktleitungstreiber (271), insbesondere ein Push-Pull-Leitungstreiber mit niedriger Impedanz, auf der Taktleitung (70) zwischengeschaltet ist, der das Taktsignal auf eine bis zu mehrere Meter lange Verlängerungsleitung einkoppelt.

9. Schaltungsanordnung nach Anspruch 8,
**dadurch gekennzeichnet, dass**
der Taktleitung (70) eine Erzeugungseinrichtung (272; 273) und eine Abschlusseinrichtung (172; 173a, 173b) für ein invertiertes Signal parallelgeschaltet ist, um eine symmetrische Taktsignalübertragung zu ermöglichen.

10. Schaltungsanordnung nach Anspruch 9,
**dadurch gekennzeichnet, dass**
der Erzeugungseinrichtung (272; 273) und dem Taktleitungstreiber (271) je ein erster und zweiter Taktleitungs-Widerstand (276, 277) in Reihe geschaltet ist.

11. Schaltungsanordnung nach einem der Ansprüche 1 bis 10,
**dadurch gekennzeichnet, dass**
eine Resetleitung (80) einen Modem-Resetausgang (280) des GSM-Modems (200) mit einem Karten-Reseteingang (180) der SIM-Karte (100) verbindet, der eine Resetsignal-Aufbesserungseinrichtung (181; 182, 184) zwischengeschaltet ist.

12. Verfahren zur Signalrichtungsfestlegung in einer Datenleitung zwischen den Schnittstellen einer SIM-Karte (100) und einem GSM-Modem (200) ohne Steuersignal für die Datenrichtung,
**dadurch gekennzeichnet , dass**
- Sende-Datensignale an der SIM-Karte (100) und an dem GSM-Modem (200) erkannt werden,
- nach dem Erkennen eines Sende-Datensignals an der SIM-Karte (100) das weitere Erkennen eines Sende-Datensignals an dem GSM-Modem (200) blockiert wird bzw. umgekehrt nach dem Erkennen eines Sende-Datensignals an dem GSM-Modem (200) das weitere Erkennen eines Sende-Datensignals an der SIM-Karte (100) blockiert wird und
- nach dem Erkennen eines Sende-Datensignals an der SIM-Karte (100) die Datenleitung (10; 30) in Richtung vom GSM-Modem (200) zur SIM-Karte (100) blockiert wird bzw. umgekehrt nach dem Erkennen eines Sende-Datensignals an dem GSM-Modem (200) die Datenleitung (10; 40) in Richtung von der SIM-Karte (100) zum GSM-Modem (200) blockiert wird.

## Claims

1. Circuit arrangement as an interface between a SIM card (100) and a GSM modem (200) without any control signal for the data direction and without a remote SIM access function, which has a bidirectional data line (10) which connects a card data input/output (110) of the SIM card (100) to a modem data input/output (210) of the GSM modem (200),
**characterized in that**
- the data line (10) has an area in which it branches into parallel first and second unidirectional data lines (30, 40)
in which a first and a second opposite direction blocking element (130, 240) are provided, such that the first unidirectional data line (30) can pass data signals only in the direction from the SIM card (100) to the GSM modem (200) and the second unidirectional data line (40) can pass data signals only in the opposite direction,
- a respective first and second data signal blocking device (123, 223) is connected, respectively, in the first and the second unidirectional data line (30, 40) and can in each case block data signals in the forward direction as well,
- a first and a second data signal direction identification device (121, 221) is connected to the respective card and modem data input/output (110, 210), and
- the respective first or second data signal direction identification device (121, 221) is connected to the respective second or first data signal direction identification device (221, 121) via a respective second or first direction identification blocking device (122, 222),
in which case data signals can always be transmitted in only one direction, **in that** the transmission of data signals from the SIM card (100) is identified by the first data signal direction identification device (121), which then uses the second direction identification blocking device (222) to block the second data signal direction identification device (221) in the direction from the GSM modem (200) to the SIM card (100), and uses the first data signal blocking device (123) to block the data line (40) in the direction from the GSM modem (200) to the SIM card (100) or, conversely, the transmission of data signals from the GSM modem (200) is identified by the second data signal direction identification device (221), which then uses the first direction identification blocking device (122) to block the first data signal direction identification device (121) in the direction from the SIM card (100) to the GSM modem (200), and uses the second data signal blocking device (223) to block the data line (30) in the direction from the SIM card (100) to the GSM modem (200).

2. Circuit arrangement according to claim 1, **characterized in that**
a first data signal conditioning device (141) is connected in the second unidirectional data line (40), and a second data signal conditioning device (231) is connected in the first unidirectional data line (30).

3. Circuit arrangement according to claim 2, **characterized in that**
the first data signal blocking device (123), the first data signal conditioning device (141) and the first opposite direction blocking element on the one hand, and the second data signal blocking device (223), the second data signal conditioning device (231) and the second opposite direction blocking element on the other hand, are each in the form of a single circuit element (130, 240).

4. Circuit arrangement according to one of claims 1 to 3,
**characterized in that**
the first and the second unidirectional data line (30, 40) have a respective first and second data line driver (132, 242) which, in particular, is a push-pull line driver with a low impedance, which couples the respective data signals to the unidirectional data line (30, 40).

5. Circuit arrangement according to claim 4, **characterized in that**
a first and a second data driver resistor (133, 243) are connected in series with the respective first or second data line driver (132, 242).

6. Circuit arrangement according to one of claims 3 to 5,
**characterized in that**
the first and the second data signal direction identification device (121, 221), the first and the second data signal blocking device (123, 223), as well as the first and the second direction identification blocking device (122, 222) are each in the form of comparators, in particular with a threshold voltage of 1.5 volts.

7. Circuit arrangement according to one of claims 1 to 6,
**characterized in that**,
of the elements which occur in pairs, one is in each case arranged physically close to the SIM card (100) and the other is arranged physically close to the GSM modem (200), and connecting lines (10, 50, 60, 70, 80) are provided between them, with a length of between 20 cm and several meters.

8. Circuit arrangement according to one of claims 1 to 7,
**characterized in that**
a clock line (70) connects a modem clock output (270) of the GSM modem (200) to a card clock input (170) of the SIM card (100), with a clock signal improvement device (171) and a clock line driver (271), in particular a push-pull line driver with a low impedance, being interposed on the clock line (70), which clock line driver (271) couples the clock signal to an extension line with a length of up to several meters.

9. Circuit arrangement according to claim 8,
**characterized in that**
a production device (272; 273) and a termination device (172; 173a, 173b) for an inverted signal are connected in parallel with the clock line (70), in order to allow a balanced clock signal transmission.

10. Circuit arrangement according to claim 9,
**characterized in that**
a first and a second clock line resistor (276, 277), respectively, are connected in series with the production device (272; 273) and the clock line driver (271).

11. Circuit arrangement according to one of claims 1 to 10,
**characterized in that**
a reset line (80) connects a modem reset output (280) of the GSM modem (200) to a card reset input (180) of the SIM card (100), with which a reset signal improvement device (181; 182, 184) is interposed.

12. Method for signal direction definition in a data line between the interfaces of a SIM card (100) and a GSM modem (200) without any control signal for the data direction,
**characterized in that**
- transmission data signals are identified on the SIM card (100) and at the GSM modem (200),
- after identification of a transmission data signal on the SIM card (100), the further identification of a transmission data signal at the GSM modem (200) is blocked or, conversely, after identification of a transmission data signal at the GSM modem (200), the further identification of a transmission data signal on the SIM card (100) is blocked, and
- after identification of a transmission data signal on the SIM card (100), the data line (10; 30) is blocked in the direction from the GSM modem (200) to the SIM card (100) or, conversely, after identification of a transmission data signal at the GSM modem (200), the data line (10; 40) is blocked in the direction from the SIM card (100) to the GSM modem (200).

## Revendications

1. Circuit d'interface entre une carte SIM (100) et un modem GSM (200) sans signal de commande pour le sens des données et sans fonction d'accès à distance Remote SIM Access, qui comporte une ligne de données bidirectionnelle (10) qui relie une entrée / sortie de données de carte (110) de la carte SIM (100) à une entrée / sortie de données de modem (210) du modem GSM (200),
**caractérisé par le fait que**
- la ligne de données (10) comporte une zone dans laquelle elle se ramifie en première et deuxième lignes de données parallèles unidirectionnelles (30, 40) dans lesquelles il est prévu un premier et un deuxième élément de blocage de sens contraire (130, 240) de telle sorte que la première ligne de données unidirectionnelle (30) ne peut laisser passer des signaux de données que dans le sens de la carte SIM (100) au modem GSM (200) et que la deuxième ligne de données unidirectionnelle (40) ne peut laisser passer des signaux de données que dans le sens contraire,
- un premier respectivement deuxième dispositif de blocage de signal de données (123, 223) est branché dans la première respectivement deuxième ligne de données unidirectionnelle (30, 40) et peut aussi bloquer des signaux de données à chaque fois dans le sens passant,
- un premier respectivement deuxième dispositif de détection de sens de signal de données (121, 221) est relié à l'entrée / sortie de données de carte respectivement de modem (110, 210), et
- le premier respectivement deuxième dispositif de détection de sens de signal de données (121, 221) est relié par l'intermédiaire d'un deuxième respectivement premier dispositif de blocage de détection de sens (122, 222) au deuxième respectivement premier dispositif de détection de sens de signal de données (221, 121),
la transmission de signaux de données ne pouvant toujours s'effectuer que dans un sens, sachant que l'émission de signaux de données de la carte SIM (100) est détectée par le premier dispositif de détection de sens de signal de données (121) qui bloque alors le deuxième dispositif de détection de sens de signal de données (221) au moyen du deuxième dispositif de blocage de détection de sens (222) et la ligne de données (40) dans le sens du modem GSM (200) à la carte SIM (100) au moyen du premier dispositif de blocage de signal de données (123) ou inversement que l'émission de signaux de données du modem GSM (200) est détectée par le deuxième dispositif de détection de sens de signal de données (221) qui bloque alors le premier dispositif de détection de sens de signal de données (121) au moyen du premier dispositif de blocage de détection de sens (122) et la ligne de données (30) dans le sens de la carte SIM (100) au modem GSM (200) au moyen du deuxième dispositif de blocage de signal de données (223).

2. Circuit selon la revendication 1,
**caractérisé par le fait qu'**un premier dispositif de préparation de signal de données (141) est branché dans la deuxième ligne de données unidirectionnelle (40) et qu'un deuxième dispositif de préparation de signal de données (231) est branché dans la première ligne de données unidirectionnelle (30).

3. Circuit selon la revendication 2,
**caractérisé par le fait que** le premier dispositif de blocage de signal de données (123), le premier dispositif de préparation de signal de données (141) et le premier élément de blocage de sens contraire d'une part et le deuxième dispositif de blocage de signal de données (223), le deuxième dispositif de préparation de signal de données (231) et le deuxième élément de blocage de sens contraire d'autre part sont conçus à chaque fois comme un unique élément de circuit (130, 240).

4. Circuit selon l'une des revendications 1 à 3,
**caractérisé par le fait que** les première et deuxième lignes de données unidirectionnelles (30, 40) comportent un premier respectivement deuxième élément d'attaque de ligne de données (132, 242), qui est notamment un élément d'attaque de ligne du type Push-Pull à basse impédance, qui introduit à chaque fois les signaux de données sur la ligne de données unidirectionnelle (30, 40).

5. Circuit selon la revendication 4,
**caractérisé par le fait qu'**une première et une deuxième résistance d'élément d'attaque de données (133, 243) sont branchées en série avec le premier respectivement le deuxième élément d'attaque de ligne de données (132, 242).

6. Circuit selon l'une des revendications 3 à 5,
**caractérisé par le fait que** le premier et le deuxième dispositif de détection de sens de signal de données (121, 221), le premier et le deuxième dispositif de blocage de signal de données (123, 223) ainsi que le premier et le deuxième dispositif de blocage de détection de sens (122, 222) sont conçus à chaque fois comme des comparateurs, notamment avec une tension de seuil de 1,5 Volt.

7. Circuit selon l'une des revendications 1 à 6,
**caractérisé par le fait que**, de chaque paire d'éléments, à chaque fois l'un est placé près de la carte SIM (100) et l'autre près du modem GSM (200) et que des lignes de liaison (10, 50, 60, 70, 80) sont prévues entre avec une longueur comprise entre 20 cm et plusieurs mètres.

8. Circuit selon l'une des revendications 1 à 7,
**caractérisé par le fait qu'**une ligne d'horloge (70) relie une sortie d'horloge de modem (270) du modem GSM (200) à une entrée d'horloge de carte (170) de la carte SIM (100), un dispositif d'amélioration de signal d'horloge (171) et un élément d'attaque de ligne d'horloge (271), notamment un élément d'attaque de ligne du type Push-Pull à basse impédance, étant intercalés sur la ligne d'horloge (70), lequel élément d'attaque de ligne d'horloge introduit le signal d'horloge sur une ligne de complément longue d'un à plusieurs mètres.

9. Circuit selon la revendication 8,
**caractérisé par le fait qu'**un dispositif de production (272 ; 273) et un dispositif de terminaison (172 ; 173a, 173b) pour un signal inversé sont branchés en parallèle de la ligne d'horloge (70) pour permettre une transmission de signal d'horloge symétrique.

10. Circuit selon la revendication 9,
**caractérisé par le fait qu'**une première et une deuxième résistance de ligne d'horloge (276, 277) sont branchées en série respectivement avec le dispositif de production (272 ; 273) et avec l'élément d'attaque de ligne d'horloge (271).

11. Circuit selon l'une des revendications 1 à 10,
**caractérisé par le fait qu'**une ligne de remise à l'état initial (80) relie une sortie de remise à l'état initial de modem (280) du modem GSM (200) à une entrée de remise à l'état initial de carte (180) de la carte SIM (100), un dispositif d'amélioration de signal de remise à l'état initial (181 ; 182, 184) étant intercalé.

12. Procédé pour la spécification d'un sens de signal dans une ligne de données entre les interfaces d'une carte SIM (100) et un modem GSM (200) sans signal de commande pour le sens des données,
**caractérisé par le fait que**
- on détecte des signaux de données d'émission sur la carte SIM (100) et sur le modem GSM (200),
- après la détection d'un signal de données d'émission sur la carte SIM (100), on bloque la suite de la détection d'un signal de données d'émission sur le modem GSM (200) ou inversement, après la détection d'un signal de données d'émission sur le modem GSM (200), on bloque la suite de la détection d'un signal de données d'émission sur la carte SIM (100), et
- après la détection d'un signal de données d'émission sur la carte SIM (100), on bloque la ligne de données (10 ; 30) dans le sens du modem GSM (200) à la carte SIM (100) ou inversement, après la détection d'un signal de données d'émission sur le modem GSM (200), on bloque la ligne de données (10 ; 40) dans le sens de la carte SIM (100) au modem GSM (200).
